# FASCICULE DE BREVET EUROPEEN

(11) **EP 1 465 266 B1**
(45) Date de publication et mention de la délivrance du brevet: **19.04.2006**
(21) Numéro de dépôt: 04290874.9
(22) Date de dépôt: 02.04.2004
(51) Int. Cl.: H01M 2/30, H01M 2/06, H01M 2/36, H01M 2/22

(54) **Raccordement électrique d'une connexion sur une borne**
Elektrischer Anschlussverbinder
Electrical connection of a terminal

(30) Priorité: 04.04.2003 FR 0304260
(43) Date de publication de la demande: 06.10.2004
(73) Titulaire: SAFT, SA, 93170 Bagnolet (FR)
(72) Inventeur: Magneron, Frédéric, 86060 Poitiers Cedex 9 (FR)
(74) Mandataire: Hirsch & Associés

(56) Documents cités:
- EP-A- 0 118 657
- FR-A- 2 513 806
- FR-A- 2 585 185
- JP-A- 9 153 368
- US-A- 4 042 756
- US-A- 4 347 293

## Description

La présente invention se rapporte au raccordement électrique d'une connexion d'électrode sur une borne de sortie de courant, et notamment une borne du type dit "traversée verre-métal" habituellement utilisée dans des générateurs électrochimique de petit format. L'invention concerne en particulier les générateurs électrochimiques destinés aux équipements portables, dont la capacité est généralement inférieure à 20Ah, notamment mais non exclusivement aux générateurs étanches au lithium. L'invention s'étend en outre au procédé de réalisation de ce raccordement.

Un générateur électrochimique comprend un faisceau électrochimique comportant une alternance d'électrodes positives et négatives encadrant un séparateur imprégné d'électrolyte. Chaque électrode est le plus souvent composée d'un collecteur de courant métallique supportant sur au moins une de ses faces la matière électrochimiquement active. L'électrode est connectée électriquement à une sortie de courant qui assure la continuité électrique entre l'électrode et l'application extérieure à laquelle le générateur est associé. Cette sortie de courant peut être le conteneur du générateur ou une borne de sortie de courant.

Le boîtier du générateur porte des orifices accueillant des dispositifs permettant de mettre en relation le faisceau électrochimique et son environnement avec l'extérieur, comme des bornes d'entrée et de sortie du courant et un dispositif de sécurité en cas de surpression interne. Le boîtier peut porter également un orifice traversant pour l'introduction d'un électrolyte liquide.

Les bornes d'un générateur électrochimique ont une double fonction: d'une part d'assurer la continuité électrique entre les électrodes du générateur électrochimique et l'application extérieure à laquelle il est associé, d'outre part de contribuer à l'étanchéité de la fermeture du générateur. La borne traverse la paroi du conteneur du générateur : la partie située à l'extérieur du conteneur reçoit les connexions provenant de l'application, la partie située à l'intérieur est reliée aux électrodes. Cette borne peut être solidaire ou rapportée au conteneur. Lorsqu'elle est rapportée au conteneur, un joint d'étanchéité et d'isolation électrique est usuellement prévu entre la sortie de courant et le conteneur du générateur. Les bornes du type dit "traversée verre-métal" (TVM) sont constituées d'un pion central métallique, qui assure la continuité électrique, entouré d'un joint en verre relié de manière étanche d'une part au pion central et d'autre part à la paroi du conteneur, par exemple le couvercle, dans laquelle la borne est insérée. Ces bornes TVM sont généralement de petite taille, et le pion central a un diamètre inférieur à sa longueur. A titre d'exemple son diamètre est compris entre 1,5 et 2mm et sa longueur est comprise entre 5 et 8mm, le diamètre de la borne étant compris entre 10 et 17mm.

Il existe plusieurs façons de raccorder électriquement une électrode à une borne de sortie de courant. L'une de ces façons est l'utilisation d'une lamelle conductrice ou mince bande métallique dont une extrémité est soudée sur le bord du collecteur de l'électrode et l'autre extrémité est soudée à la partie de la borne située à l'intérieur du conteneur. En pratique, pour connecter une électrode à une sortie de courant, par exemple à une borne qui traverse un couvercle, l'extrémité de la lamelle est positionnée, maintenue et fixée sur la partie interne de la borne. Le générateur est ensuite fermé à l'aide du couvercle.

Lorsque le générateur électrochimique contient un électrolyte liquide, il est nécessaire de prévoir un orifice de remplissage, généralement porté par le couvercle. Dons le cas de générateurs de petite taille, cet orifice peut être aménagé à l'intérieur même de la borne de sortie de courant afin de gagner de la place sur le couvercle. C'est le cas par exemple du générateur décrit par le document JP-60 023 970 qui comporte une borne TVM creuse afin de permettre l'introdudion de l'électrolyte. Ensuite l'orifice de remplissage est obturé par une tige insérée dans le tube, puis un rétrécissement du tube est réalisé par matage, enfin l'orifice est fermé par soudure au laser. Le raccordement électrique s'effectue par une connexion fixée sur la surface latérale cylindrique de la partie interne du pion.

Dans ce mode de réalisation, le positionnement de la lamelle vis-à-vis de la partie interne de la borne ainsi que son maintien avant sa fixation s'avère mal aisé. La fermeture du couvercle engendre ensuite un pliage complexe de la connexion. Au cours de cette opération, la fixation de la lamelle sur la borne, voire la lamelle elle-même, risque d'être détériorée. Les risques qui en découlent sont d'une part la survenue de courts-circuits et d'autre part l'obturation de la partie inférieure de l'orifice de remplissage en électrolyte.

La présente invention a pour but d'éliminer les inconvénients de l'art antérieur et, en particulier, le risque d'obturation de l'orifice d'introduction de l'électrolyte. A cet effet elle propose un générateur électrochimique dans lequel le raccordement électrique de la connexion à la borne supprime ce risque. Elle propose aussi un procédé de fabrication de ce générateur.

L'objet de la présente invention est un système de raccordement électrique d'une connexion plane sur une borne de sortie de courant comprenant un pion conducteur creux de forme tubulaire. La connexion comporte un orifice et elle est fixée sur une section transversale du pion de manière à faire communiquer cet orifice avec l'intérieur du pion.

Ainsi la hauteur totale du pion, donc l'encombrement du système, peut être réduite par rapport à un système dans lequel la connexion serait fixée sur une surface latérale du pion.

De préférence la connexion est soudée sur le pion afin d'assurer un contact électrique fiable. En outre on constate que la tenue à l'arrachement d'une telle fixation est de beaucoup supérieure à celle observée pour une connexion soudée sur la surface latérale du pion.

L'invention a aussi pour objet un générateur électrochimique incluant un système de raccordement électrique d'une connexion plane, reliée électriquement à une des électrodes, sur une borne de sortie de courant comportant un pion central conducteur, ledit pion ayant la forme d'un tube dont une extrémité s'ouvre vers l'extérieur et l'autre extrémité s'ouvre vers l'intérieur dudit générateur, caractérisé en ce que ladite connexion comporte un orifice et est soudée sur la face transversale interne dudit pion de manière à faire coïncider ledit orifice avec l'intérieur dudit pion.

Dans ce cas la longueur de la connexion, nécessaire à la mise en place du raccordement, est moindre que dans les générateurs connus. Une longueur plus courte facilite le positionnement de la connexion à l'intérieur du générateur lors de sa fermeture. On évite ainsi les courts-circuits. En outre le risque d'obstruction du canal interne du pion est éliminé du fait de la présence d'un orifice dans la connexion et du maintien en place de cet orifice par rapport au pion.

De préférence ladite borne de sortie de courant est constituée d'au moins un pion central conducteur tubulaire entouré d'un joint annulaire en verre.

L'invention a encore pour objet un procédé de réalisation d'un système de raccordement électrique d'une connexion plane sur une borne de sortie de courant comprenant un pion conducteur tubulaire. Le procédé comprend les étapes suivantes : on place la connexion sur une extrémité transversale du pion, puis on fixe la connexion sur l'extrémité, et enfin on perce la connexion.

La connexion est d'abord placée sur une extrémité transversale du pion qui est maintenu à l'aide d'une pince. La position de la connexion sur la borne présente l'avantage de préserver la visibilité de l'emplacement où s'effectue la fixation pendant toute la durée de l'opération.

Avantageusement on soude la connexion sur le pion de manière à assurer une fixation fiable. De préférence on soude électriquement la connexion sur le pion. Dans ce cas la pince peut constituer une première électrode de soudure dont la position reste fixe au cours de l'opération de soudure, et la connexion est soudée électriquement sur le pion à l'aide d'une seconde électrode de soudure déplaçable pour venir se placer précisément en position de soudure.

Enfin on perce ladite connexion à l'aide d'un outil introduit à l'intérieur dudit pion afin de réaliser un orifice. Avantageusement cet orifice est obtenu par découpe et enfoncement de matière afin d'obtenir un crevé. Ainsi le perçage ne produit pas de copeaux, ni de poussières métalliques susceptibles de rester à l'intérieur du générateur et de provoquer des courts-circuits. En outre le perçage de la connexion après fixation de celle-ci sur le pion garantit l'alignement de l'intérieur du tube et de l'orifice réalisé.

L'invention a aussi pour objet un procédé de fabrication d'un générateur électrochimique incluant un système de raccordement électrique d'une connexion plane sur une borne de sortie de courant comprenant un pion conducteur tubulaire, ledit procédé comprenant les étapes suivantes :
- on maintient ledit pion à l'aide d'une pince constituant une première électrode de soudure, dont le position est de préférence fixe,
- on place ladite connexion sur l'extrémité transversale interne dudit pion,
- on soude électriquement ladite connexion sur ladite extrémité à l'aide d'une seconde électrode, de préférence mobile pour être amenée en position de soudure,
- on perce ladite connexion à l'aide d'un outil introduit à l'intérieur dudit pion de manière à réaliser un orifice par découpe et enfoncement de matière.

Après introduction de l'électrolyte dans le générateur électrochimique, le canal intérieur du pion est obturé à l'aide d'une tige métallique. Avantageusement le diamètre intérieur de l'orifice de la connexion est moindre que le diamètre intérieur du pion. Ainsi la tige métallique est retenue et ne tombe pas dans le générateur. Il n'y a donc pas besoin de sertir ou mater la tige pour la maintenir en place pendant la réalisation de la soudure de fermeture.

L'invention sera mieux comprise et d'autres avantages et particularités apparaîtront à la lecture de la description qui va suivre, donnée bien entendu à titre illustratif et non limitatif, et dans le dessin annexé sur lequel
- la figure 1 est une vue en coupe d'une borne de sortie de courant du type "traversée verre-métal" (TVM) dont le pion central comprend un canal intérieur pour l'introduction d'un électrolyte liquide,
- la figure 2 est une vue en coupe du couvercle d'un générateur électrochimique comportant une borne de sortie de courant du type TVM dont le pion central comprend un canal intérieur pour l'introduction d'un électrolyte liquide,
- la figure 3 montre l'opération de raccordement électriquement d'une connexion d'électrode à une borne TVM selon l'art antérieur,
- la figure 4 représente une vue partielle en coupe d'un générateur électrochimique dans lequel l'électrode est raccordée électriquement à une borne TVM selon l'art antérieur,
- la figure 5 montre l'opération de raccordement électriquement d'une connexion d'électrode à une borne TVM selon la présente invention,
- la figure 6 montre l'opération de perçage de la connexion après fixation sur le pion,
- la figure 7 représente une vue partielle en coupe d'un générateur électrochimique dans lequel l'électrode est raccordée électriquement à une borne TVM selon la présente invention.

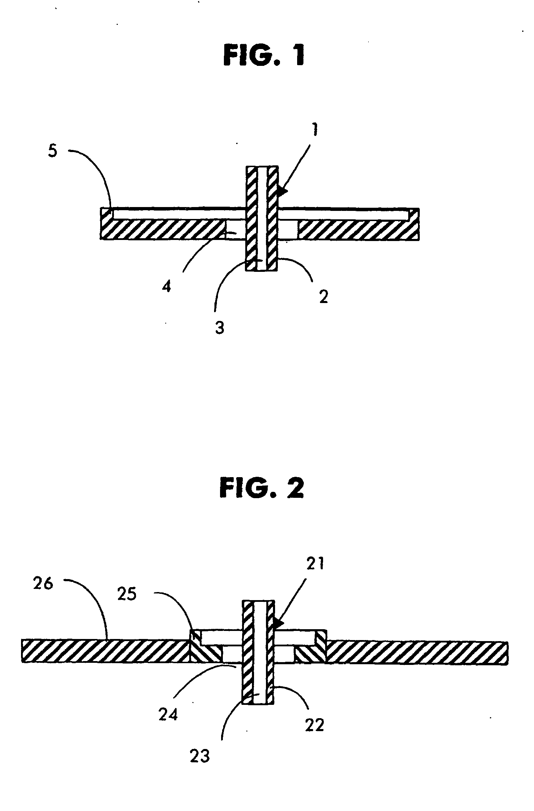

Sur la figure 1, on a représenté en coupe une borne de sortie de courant **1** du type "traversée verre-métal" (TVM). La borne est composée d'un pion central **2** creux comportant un canal interne **3** servant de passage pour l'introduction de l'électrolyte lors du remplissage. Le pion central tubulaire **2** est entouré d'un joint annulaire **4** en verre qui sert le liaison avec le couvercle **5** de l'accumulateur. Le couvercle **5** est métallique et peut être utilisé comme borne pour la polarité opposée.

La figure 2 représente une variante **21** du même type de borne, mais destinée à être utilisé pour des générateurs de dimensions plus importantes. La borne comprend un pion central **22,** muni d'un canal intérieur **23** pour le passage de l'électrolyte, et entouré d'un joint de verre **24.** Ce joint est relié à une coupelle **25** métallique qui peut être par exempte soudée sur le couvercle **26** d'un générateur.

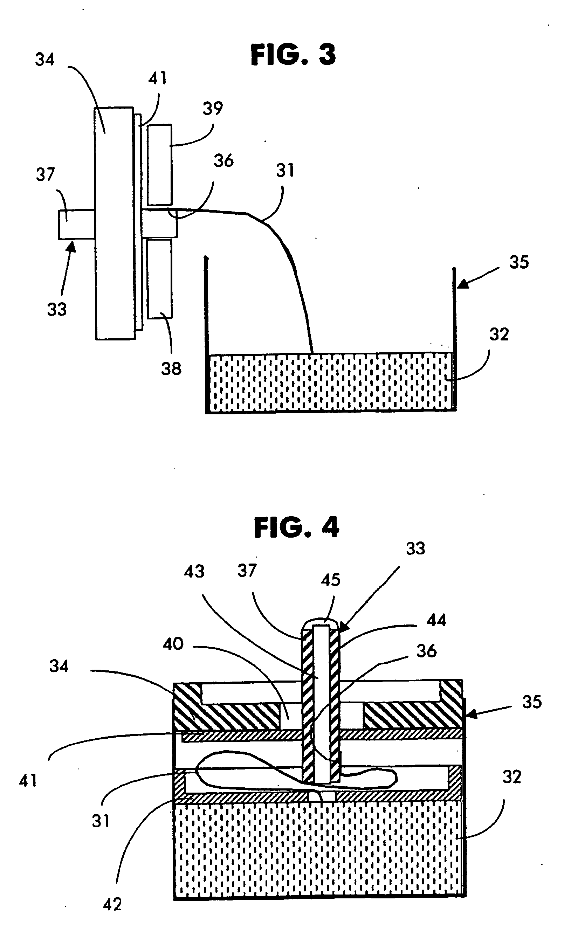

Les figures 3 et 4 montrent un raccordement électrique selon l'art antérieur entre une connexion **31** reliée au faisceau électrochimique **32** et une borne **33** de sortie de courant insérée dans le couvercle **34** d'un générateur **35.**

On voit sur la figure 3 que la connexion **31** doit avoir une longueur suffisante pour pouvoir être placée sur la surface latérale **36** du pion **37** de la borne **33.** La connexion **31** est alors soudée sur la surface latérale **36** du pion **37** entre une électrode fixe **38** et une électrode mobile **39.** Le couvercle **34** est ensuite rabattu pour fermer le générateur **35.**

La figure 4 est une vue en coupe du générateur **35** une fois le couvercle **34** refermé. On y voit le pion **37** entouré d'un joint de verre **40** qui le relie au couvercle **34.** Lors de la fermeture, la connexion **31** prend une forme de "S" aplati afin de pouvoir se loger entre le faisceau électrochimique **32** et le couvercle **34 en** passant sous la base du pion **37** au risque d'empêcher le passage de l'électrolyte. L'isolation électrique entre le couvercle **34** et la connexion **31** est assurée par une rondelle isolante supérieure **41.** Une rondelle isolante **42** en forme de coupelle est nécessaire pour assurer l'isolation entre la connexion **31** et le faisceau électrochimique **32.** Après introduction de l'électrolyte un clou **43** est insérée dans le canal intérieur **44** du pion **37** et son extrémité supérieure **45** est soudée pour assurer l'étanchéité du générateur **35.**

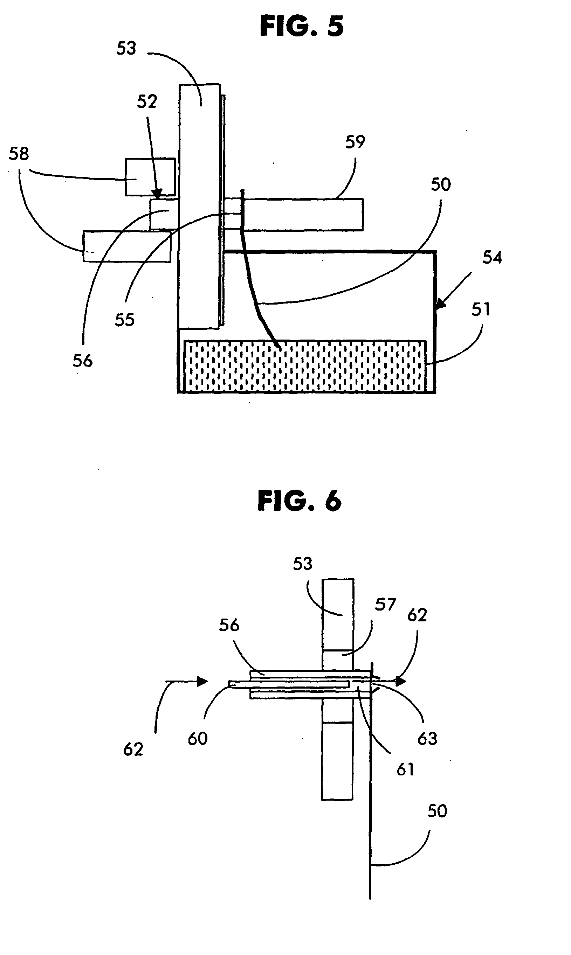

Les figures 5 à 7 montrent un raccordement électrique selon l'invention entre une connexion **50** reliée au faisceau électrochimique **51** et une borne **52** de sortie de courant insérée dans le couvercle **53** d'un générateur **54.**

On voit sur la figure 5 que la connexion **50** a une longueur très inférieure à la connexion **31** de la figure 3. Cette longueur est cependant suffisante pour lui permettre de se placer sur la surface transversale **55** du pion **56** entouré d'un joint de verre **57** formant la borne **52.** La connexion **50** est alors soudée sur l'extrémité **55** du pion **56** entre une pince servant de contre-éledrode fixe **58** et une électrode mobile **59.**

Une tige métallique **60** est ensuite introduite dans la partie interne creuse **61** du pion **56,** comme représenté sur la figure 6, et une pression dons la direction des flèches **62** est exercée sur la tige **60** afin de créer un orifice **63.** Le couvercle **53** est ensuite rabattu pour fermer le générateur **54.**

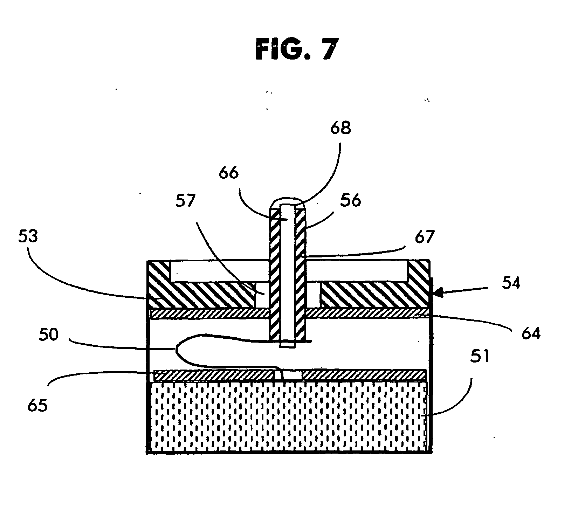

La figure 7 est une coupe du générateur **54** une fois le couvercle **53** refermé. On y voit le pion **56** entouré du joint de verre **57** qui le relie au couvercle **53.** Lors de fermeture, la connexion **50** prend une forme de "U" couché pour se loger entre le faisceau électrochimique **51** et le couvercle **53.** La forme adoptée par la connexion **50** écarte tout risque vis-à-vis de l'obstruction du canal d'introduction de l'électrolyte. L'isolation électrique entre le couvercle **53** et la connexion **50** est assurée par une rondelle isolante supérieure **64.** Une rondelle isolante **65** plane suffit à assurer l'isolation entre la connexion **50** et le faisceau électrochimique **51.** Après introduction de l'électrolyte un clou **66** est inséré dons le canal intérieur **67** du pion **56** et son extrémité supérieure **68** est soudée pour assurer l'étanchéité du générateur.

## Revendications

1. Système de raccordement électrique d'une connexion plane (50) sur une borne de sortie de courant (52) comprenant un pion conducteur tubulaire (56), **caractérisé en ce que** ladite connexion comporte un orifice (63) et **en ce que** ladite connexion est fixée sur une section transversale (55) dudit pion, ledit orifice coïncidant avec l'intérieur dudit pion.

2. Système selon la revendication 1, dans lequel ladite connexion est soudée sur ledit pion.

3. Générateur (54) incluant un système de raccordement selon l'une des revendications 1 et 2, comportant une connexion plane reliée électriquement à une des électrodes et une borne de sortie de courant comprenant un pion central conducteur entouré d'un joint annulaire en verre (57), ledit pion ayant la forme d'un tube dont une extrémité s'ouvre vers l'extérieur et l'autre extrémité s'ouvre vers l'intérieur dudit générateur, **caractérisé en ce que** ladite connexion comporte un orifice et est soudée sur la face transversale interne dudit pion de manière à faire coïncider ledit orifice avec l'intérieur dudit pion.

4. Générateur selon la revendication 3, dans lequel ladite borne de sortie de courant est constituée d'au moins un pion central conducteur tubulaire entouré d'un joint annulaire en verre.

5. Générateur selon l'une des revendications 3 et 4, dans lequel le diamètre intérieur de dudit orifice est moindre que le diamètre intérieur dudit pion.

6. Procédé de réalisation d'un système de raccordement selon l'une des revendications 1 et 2, comportant une connexion plane et une borne de sortie de courant comprenant un pion conducteur tubulaire, ledit procédé comprenant les étapes suivantes :
- on place ladite connexion sur une extrémité transversale dudit pion,
- on fixe ladite connexion sur ladite extrémité,
- on perce ladite connexion.

7. Procédé selon la revendication 6, dans lequel ledit pion est maintenu à l'aide d'une pince (58).

8. Procédé selon l'une des revendications 6 et 7, dans lequel on soude ladite connexion sur ledit pion.

9. Procédé selon l'une des revendications 6 à 8, dans lequel on soude électriquement ladite connexion sur ledit pion.

10. Procédé selon la revendication 9, dans lequel ladite pince constitue une première électrode de soudure.

11. Procédé selon l'une des revendications 9 et 10, dans lequel ladite connexion est soudée électriquement sur ledit pion à l'aide d'une seconde électrode de soudure (59).

12. Procédé selon lune des revendications 6 à 11, dans lequel on perce ladite connexion à l'aide d'un outil (60) introduit à l'intérieur dudit pion.

13. Procédé selon lune des revendications 6 à 12, dans lequel on réalise un orifice dans ladite connexion par découpe et enfoncement de matière.

14. Procédé de fabrication d'un générateur électrochimique selon l'une des revendications 3 à 5 comportant une connexion plane et une borne de sortie de courant comprenant un pion conducteur tubulaire, ledit procédé comprenant les étapes suivantes :
- on maintient ledit pion à l'aide d'une pince constituant une première électrode de soudure,
- on place ladite connexion sur l'extrémité transversale interne dudit pion,
- on soude électriquement ladite connexion sur ladite extrémité à l'aide d'une seconde électrode,
- on perce ladite connexion à l'aide d'un outil introduit à l'intérieur dudit pion de manière à réaliser un orifice par découpe et enfoncement de matière.

## Claims

1. System for electric coupling of a plane connection on a current output terminal comprising a tubular conducting slug, **characterized in that** said connection comprises a hole and **in that** said connection is fixed on a transversal section of said slug in such a manner as to cause this hole to communicate with the inside of said tube.

2. System according to claim 1, in which said connection is welded to said slug.

3. Generator including a coupling system according to one of claims 1 and 2, comprising a plane connection connected electrically to one of the electrodes and a current output terminal comprising a central conducting slug surrounded by an annular glass seal, said slug being in the shape of a tube 'one end of which opens towards the outside and the other end opens towards the inside of said generator, **characterized in that** said connection comprises a hole and is welded to the internal transversal face of said slug in such a manner as to cause said hole to coincide with the inside of said slug.

4. Generator according to claim 3, in which said current output terminal is constituted by at least one tubular conducting central slug surrounded by an annular glass seal.

5. Generator according to one of claims 3 or 4, in which the internal diameter of said hole is smaller than the internal diameter of said slug.

6. Method for producing a coupling system according to one of claims I and 2, comprising a plane connection and a current output terminal comprising a tubular conducting slug, said method comprising the following steps:
- said connection is placed on one transversal end of said slug,
- said connection is fixed to said end,
- said connection is pierced.

7. Method according to claim 6, in which said slug is held using a clamp.

8. Method according to one of claims 6 and 7, in which said connection is welded to said slug.

9. Method according to one of claims 6 to 8, in which said connection is electrically welded to said slug.

10. Method according to claim 9, in which said clamp constitutes a first welding electrode.

11. Method according to one of claims 9 and 10, in which said connection is welded electrically to said slug using a second welding electrode.

12. Method according to one of claims 6 to 11, in which said connection is pierced using a tool introduced inside said slug.

13. Method according to one of claims 6 to 12, in which a hole is made in said connection by cutting and pushing of material.

14. Method for producing an electrochemical generator according to one of claims 3 to 5 comprising a plane connection and a current output terminal comprising a tubular conducting slug, said method comprising the following steps:
- said slug is held using a clamp constituting a first welding electrode;
- said connection is placed on the transversal end of said slug.
- said connection is welded electrically to said end using a second electrode;
- said connection is pierced using a tool introduced inside said slug in such a manner as to make a hole by cutting and pushing of material.

## Patentansprüche

1. Elektrisches Verbindungssystem eines flachen Anschlusses (50) an einer Stromausgangsklemme (52), mit einem stromleitenden, rohrförmigen Stift (56), **dadurch gekennzeichnet, dass** der Anschluss eine Öffnung (63) aufweist und an einem Querschnitt (55) des Stiftes in solcher Weise befestigt ist, dass die Öffnung und die Innenseite des Stiftes übereinstimmen.

2. Elektrisches Verbindungssystem nach Anspruch 1, bei welchem der Anschluss an den Stift geschweißt ist.

3. Generator (54) mit einem Verbindungssystem nach einem der Ansprüche 1 und 2, aufweisend einen mit einer der Elektroden elektrisch verbundenen, flachen Anschluss und eine Stromausgangsklemme, die einen stromführenden Mittelstift aufweist, der mit einer ringförmigen Glasdichtung (57) umgeben ist, wobei der Stift rohrförmig ausgebildet ist und mit einem Ende zur Außenseite und mit dem anderen Ende zur Innenseite des Generators mündet, **dadurch gekennzeichnet, dass** der Anschluss eine Öffnung aufweist und in solcher Weise an die innere Querschnittsfläche des Stiftes geschweißt ist, dass die Öffnung mit der Innenseite des Stiftes übereinstimmt.

4. Generator nach Anspruch 3, **dadurch gekennzeichnet, dass** die Stromausgangsklemme aus zumindest einem stromführenden, rohrförmigen, mit einer ringförmigen Glasdichtung umgebenen Mittelstift besteht.

5. Generator nach einem der Ansprüche 3 oder 4, bei welchem der Innendurchmesser der Öffnung kleiner als der Innendurchmesser des Stiftes ist.

6. Verfahren zur Herstellung eines Verbindungssystems nach einem der Ansprüche 1 und 2, mit einem flachen Anschluss und einer Stromausgangsklemme, aufweisend einen stromführenden, rohrförmigen Stift, wobei das Verfahren die folgenden Schritten aufweist:
- Platzieren des Anschlusses an einem Querschnittsende des Stiftes;
- Befestigen des Anschlusses an diesem Ende;
- Durchstechen des Anschlusses.

7. Verfahren nach Anspruch 6, bei welchem der Stift mit Hilfe einer Klemme (58) gehalten wird.

8. Verfahren nach einem der Ansprüche 6 oder 7, bei welchem der Anschluss an den Stift geschweißt wird.

9. Verfahren nach einem der Ansprüche 6 bis 8, bei welchem der Anschluss an den Stift elektrisch geschweißt wird.

10. Verfahren nach Anspruch 9, bei welchem die Klemme eine erste Schweißelektrode bildet.

11. Verfahren nach einem der Ansprüche 9 und 10, bei welchem der Anschluss mit Hilfe einer zweiten Schweißelektrode (59) an den Stift elektrisch geschweißt wird.

12. Verfahren nach einem der Ansprüche 6 bis 11, bei welchem der Anschluss mit Hilfe eines in das Innere des Stiftes eingeführten Werkzeugs (60) durchstoßen wird.

13. Verfahren nach einem der Ansprüche 6 bis 12, bei welchem im Anschluss durch das Einstechen und Durchstoßen des Materials eine Öffnung erzeugt wird.

14. Verfahren zur Herstellung eines elektrochemischen Generators nach einem der Ansprüche 3 bis 5, der einen flachen Anschluss und eine Stromausgangsklemme aufweist, aufweisend einen stromführenden, rohrförmigen Stift, wobei das Verfahren die folgenden Schritte umfasst:
- Halten des Stiftes mit Hilfe einer Klemme, die eine erste Schweißelektrode bildet,
- Platzieren des Anschlusses am inneren Querschnittsende des Stiftes,
- Elektrisches Schweißen des Anschlusses an dieses Ende mit Hilfe einer zweiten Elektrode,
- Durchstechen des Anschlusses mit Hilfe eines in das Innere des Stiftes eingeführten Werkzeugs in solcher Weise, dass durch das Einstechen und Durchstoßen des Materials eine Öffnung erhalten wird.
